# EUROPEAN PATENT APPLICATION

(11) **EP 2 884 754 A1**
(43) Date of publication of application: **17.06.2015**
(21) Application number: 14167983.7
(22) Date of filing: 12.05.2014
(51) Int. Cl.: H04N 21/25, H04N 21/258, H04N 21/262, H04N 21/482, H04N 21/462

(54) **Electronic device, method and program**

(30) Priority: 13.12.2013 JP 2013258311
(71) Applicant: Kabushiki Kaisha Toshiba, Tokyo 105-8001 (JP)
(72) Inventor: Kato, Masaya, Tokyo, 105-8001 (JP); Okano, Kazuyuki, Tokyo, 105-8001 (JP)
(74) Representative: Henkel, Breuer & Partner

(57) **Abstract**

An electronic device receives information of a plurality of broadcast programs (4A1, 4A2, ..., 4B1, 4B2, ...), displays a program table generated by use of the plurality of broadcast programs, records a first broadcast program of the plurality of broadcast programs, and acquires first information about one or more scenes included in the first broadcast program after recording the first broadcast program. The electronic device displays information of the first broadcast program by a first embodiment when displaying a first program table that displays at least information of the first broadcast program after recording the first broad cast program and before acquiring the first information, and displays information of the first broadcast program by a second embodiment, which differs from the first embodiment, when displaying a second program table that displays at least information of the first broadcast program after acquiring the first information.

## Description

Embodiments described herein relate generally to an electronic device, method and program for displaying the information of a television broadcast program.

A program recording apparatus configured to record a program content (referred to as a program hereinafter) broadcast in a television broadcast has a function to list a plurality of recorded programs to make and display the table of the recorded programs. Regarding the program recording apparatus, there is a model capable of collectively recording all the programs broadcast in a plurality of channels over a plurality of days. This model has a function to acquire program information of the respective collectively-recorded programs and to make a past program table that displays the list of the programs. In any case, while a user needs to select from a plurality of recorded programs a program that he or she wants to view, it is desired that he or she understand the contents of the respective programs in the recorded program list and the past program table when making the selection.

There is also provided a service to offer via the Internet the scene information that presents the content of a program for each program after broadcasting. Since a user is allowed to understand the program content easily, this service offers very useful information when choosing a program that he or she wants to view. Note that some time lag can occur as a broadcast program is not always provided in real time.

One object of the invention is to provide an electronic device, method and program for understanding a scene information acquisition status of each program with a list of programs presented.

The electronic device of the invention comprises a reception means, a display control means, a recording control means and an acquisition means, the reception means receiving information of a plurality of broadcast programs, the display control means displaying a program table generated by use of the plurality of broadcast programs, the recording control means recording a first broadcast program of the plurality of broadcast programs, and the acquisition means acquiring first information about one or more scenes included in the first broadcast program after recording the first broadcast program. The display control means displays information of the first broadcast program by a first embodiment when displaying a first program table that displays at least information of the first broadcast program after recording the first broad cast program and before acquiring the first information, and displays information of the first broadcast program by a second embodiment, which differs from the first embodiment, when displaying a second program table that displays at least information of the first broadcast program after acquiring the first information.

A general architecture that implements the various features of the embodiments will now be described with reference to the drawings. The drawings and the associated descriptions are provided to illustrate the embodiments and not to limit the scope of the invention.
FIG. 1 is a schematic block diagram illustrating a digital television (referred to as DTV hereinafter) broadcast system to which an embodiment is applied.
FIG. 2 is a schematic block diagram illustrating the DTV shown in FIG. 1.
FIG. 3 is a diagram illustrating that scene information is delivered and that scene information is displayed upon a user's request in the system shown in FIG. 1.
FIG. 4 is an exemplary diagram illustrating a software configuration in the DTV shown in FIG. 1.
FIG. 5 is an exemplary diagram illustrating that the display column of scene information is overlay-displayed on the replay display screen of the content of a recorded program in the DTV shown in FIG. 1.
FIG. 6 is an exemplary table illustrating the past program table made in the DTV shown in FIG. 1.
FIG. 7 is another exemplary table illustrating the past program table (a plurality of scene information items for a program) made in the DTV shown in FIG. 1.
FIG. 8 is an exemplary diagram illustrating the table of "Zam-mai" (explained later) plays programs in the DTV shown in FIG. 1.

The following will describe embodiments of the invention in detail with reference to the drawings.

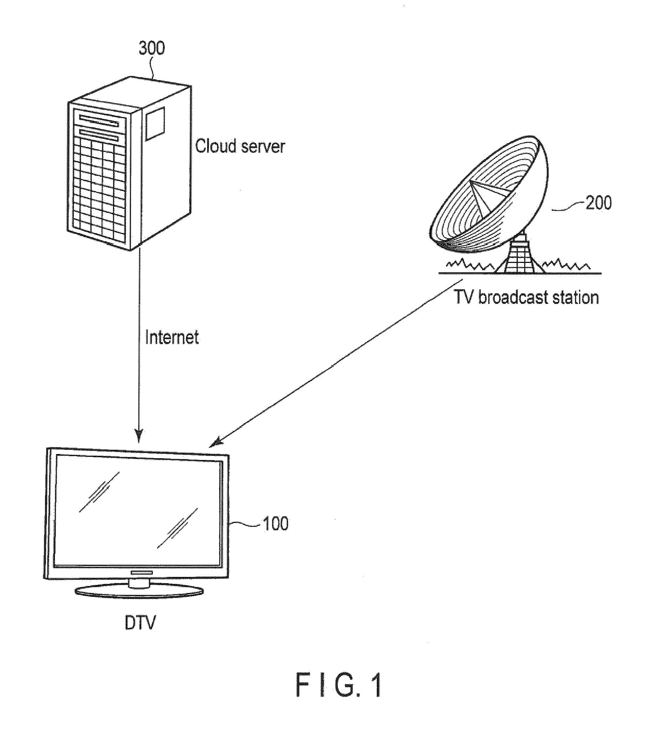

FIG. 1 a schematic block diagram illustrating a digital television broadcast system to which the present embodiment is applied. In FIG. 1, 100 represents a digital television broadcast reception apparatus (referred to as DTV hereinafter) having a function to record collectively, 200 represents a TV broadcast station configured to provide a program content by digital broadcast, and 300 represents a cloud server configured to provide the scene information of a broadcast program. The DTV 100 replays and outputs a program content specified by a user while receiving a digital broadcast signal transmitted from the TV broadcast station 200 and recording program contents collectively. The DTV 100 comprises a function to make a past program table that displays the list of the respective programs during recording and a function to acquire scene information about each program provided from the cloud server 300.

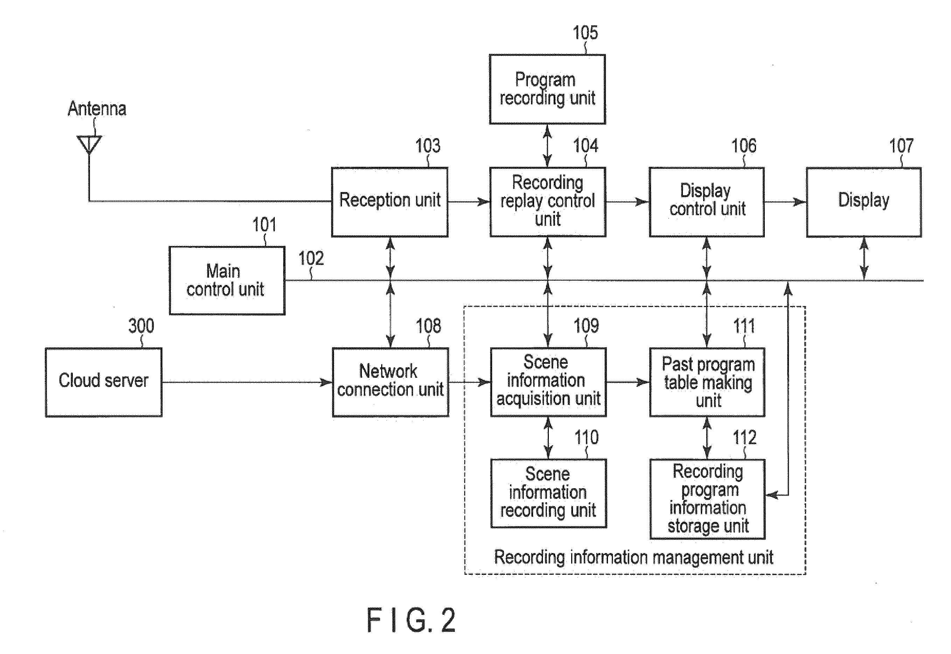

FIG. 2 is a schematic block diagram illustrating the DTV 100 used for the present embodiment. In FIG. 2, 101 represents a main control unit configured to operate and process the whole of the apparatus, 102 represents a control bus, and 103 to 112 represent processing units configured to perform a predetermined processing in accordance with the control direction from the main control unit 101.

The reception unit 103, comprising a plurality of tuners to receive a plurality of channels collectively, encodes and replays program content from the broadcast signal received at each tuner.

The recording replay control unit 104 records in the program recording unit 105 the program content acquired in the reception unit 103 and records in the recorded program information recording unit 112 the program information superimposed on the program content. Also, the recording replay control unit 104 reads, replays and outputs from the program recording unit 105 a program content specified by a user. The display control unit 106 decodes the program content replayed in the recording replay control unit 104 and displays it on the display 107.

The network connection unit 108 is connected to the cloud server 300 via a network and fetches delivery information from the cloud server 300.

The information acquisition unit 109 acquires the scene information of each program delivered from the cloud server 300 via a network and record it in the scene information recording unit 110 associated with the programs.

The past program table making unit 111 makes a past program table by acquiring the program information of all the programs recorded in the program recording unit 105 from the recording program information storage unit 112 and displays it on the display 107 via the display control unit 106 upon a user's request. Also, the past program table making unit 111 receives the acquisition status of scene information of each program from the scene information recording unit 110 to recognize and display a program that has received scene information in the past program table.

The following is an explanation of scene information.

In the system of the present embodiment, the DTV (client terminal) 100 shown in FIG. 1 can use a mobile terminal (portable device such as tablet personal computer or smartphone) as well as a television receiver. The DTV 100 may be any device if it comprises, as a client terminal, a user interface, a communication function, a function to receive broadcasting, a processing function to process a received broadcast (i.e., a program), a program output function to output a program and a storage memory. One of the examples of device is a digital recorder. Also, the device can be applied to a personal computer (PC) having a function to receive broadcasting, a video display apparatus (monitor apparatus) connected to a video recording apparatus having a broadcast reception device and a portable terminal device having a broadcast reception function.

Note that the broadcast station 200 includes a station provided by a broadcaster as a radio wave that spreads in space or a station delivered by a provider via a network such as cable and Internet Protocol (IP). The broadcast station 200 includes video, audio and/or music and provides a program, in which a certain time period (broadcast time) is treated as a unit, continuously or in a certain period (time). Note also that a program may be referred to as a content or stream and that a video includes animation, still images, text (information represented by coded text and symbols) and the arbitrary combination thereof.

The following is an explanation of a time cloud function installed in the DTV 100.

The time cloud function is a service that associates a video content with a tag or scene information made by a meta data generating company, user or bot (tag bot). The time cloud function comprises three functions: Scenefo, SceneList and ScenePlay. These three functions are referred to as Scenefo, SceneList and ScenePlay applications.

Scenefo means scene information.

SceneList means a list of scene information.

ScenePlay means to replay by use of scene information.

In the following, the function of SceneList is mainly explained regarding the present embodiment.

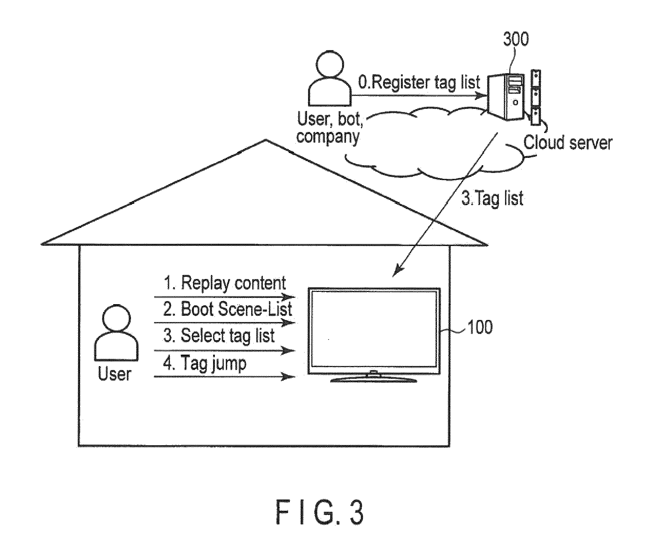

FIG. 3 is a diagram illustrating that scene information is delivered and that scene information is displayed upon a user's request. In FIG. 3, SceneList is a function to select and view only a scene that a user wants to view during replay. This function allows a user to select and view a scene that he or she wants to view from a tag list of various tag lists such as a user making tag list, a bot tag list and a company making tag list provided by a metadata generating company, as described below:
0. Register tag list
1. Replay content
2. Boot SceneList
3. Transmit/receive list of tag lists
4. Select (input/operate) tag list
5. Transmit/receive tag list
6. Tag jump

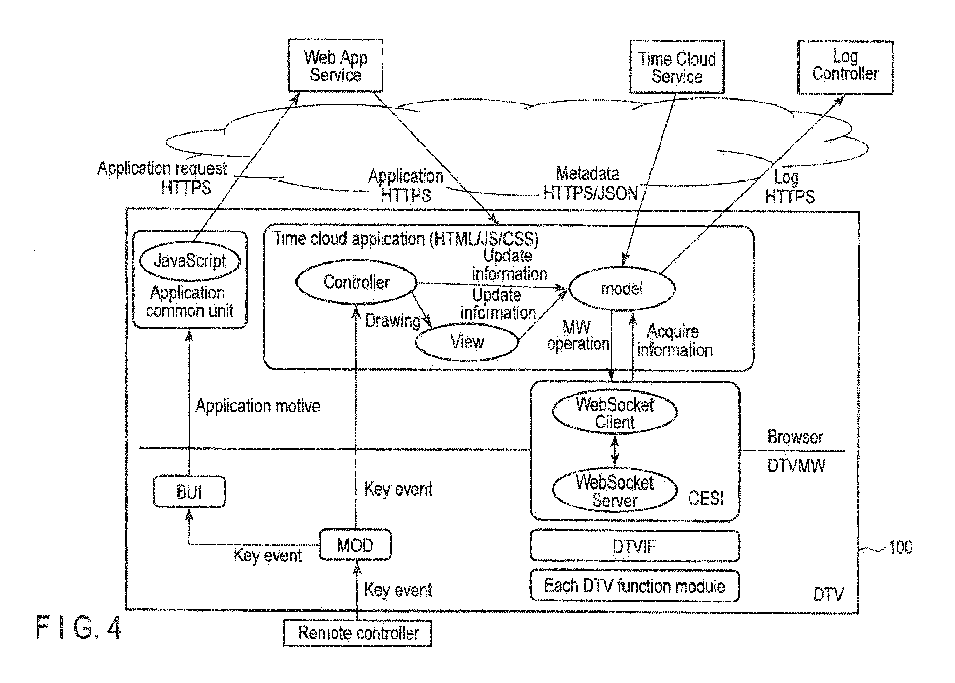

FIG. 4 is an exemplary diagram illustrating a software configuration in the DTV 100. In FIG. 4, a time cloud application (HTML/JS/CSS) comprises "Controller" (in charge of key event processing), "View" (in charge of screen display) and "Model" (in charge of operation of the DTV 100 and acquisition of information from DTVMW (pass between DTVMW and browser) and the cloud server 300).

Each DTV function module comprises a time cloud module to realize Scenefo, SceneList and ScenePlay functions. Each DTV function module further comprises a recording replay (data processing) module for reproducing and recording a program (content), which is a fundamental function of the DTV 100, and a search module for searching a program, scene and the like.

The cloud server 300, which provides scene information about the metadata of program information, manages the program metadata information needed to realize Scenefo, SceneList and ScenePlay functions of the time cloud service. Metadata used for service is acquired from a metadata generating company that provides metadata (or a tag list made by a user). The cloud server 300 uses the acquired metadata to generate the scene information indicative of the detailed information of a scene in a program and transmit it to the DTV 100.

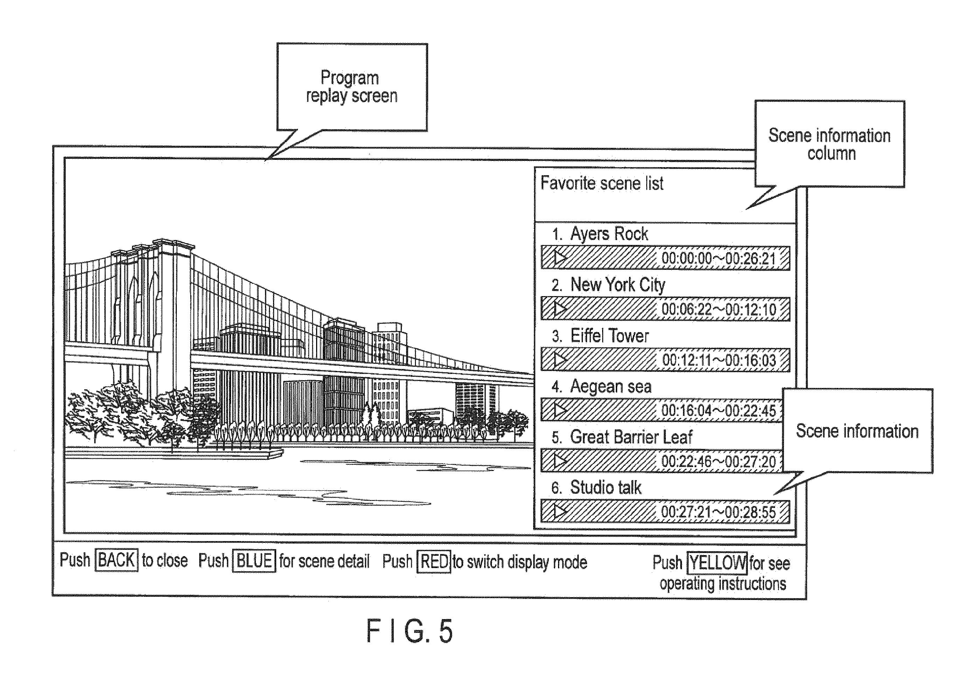

FIG. 5 is an exemplary diagram illustrating that the display column of scene information acquired from the cloud server 300 is overlay-displayed on the replay display screen of recorded program contents.

While a program is replayed, a recorded program, which is recorded by the program recording unit 105 in accordance with the instruction of the main control unit 101, is displayed on the display 107 from the recording replay control unit 104 via the display control unit 106. At this time, the main control unit 101 inquires to the scene information acquisition unit 109 whether there is scene information corresponding to the replayed program. The scene information acquisition unit 109 acquires scene information from the cloud server 300 via the network connection unit 108, when the scene information storage unit 110 does not contain scene information. When scene information exists, the scene information is synthesized with the program replay in the display control unit 106 in accordance with the instruction of the main control unit 101. The scene information column is thereby overlay-displayed on the program replay screen, as shown in Fig. 5.

The past program table making unit 111 makes a past program table based on the information stored in the recording program information storage unit 112, when the table is displayed. At this time, the past program table making unit 111 inquires the status (presence or absence) of scene information to the scene information acquisition unit 109 for each program and makes a past program table by changing a display format so that the presence or absence of scene information can be recognized by each program. The past grogram table made as described above is displayed on the display 107 via the display control unit 106.

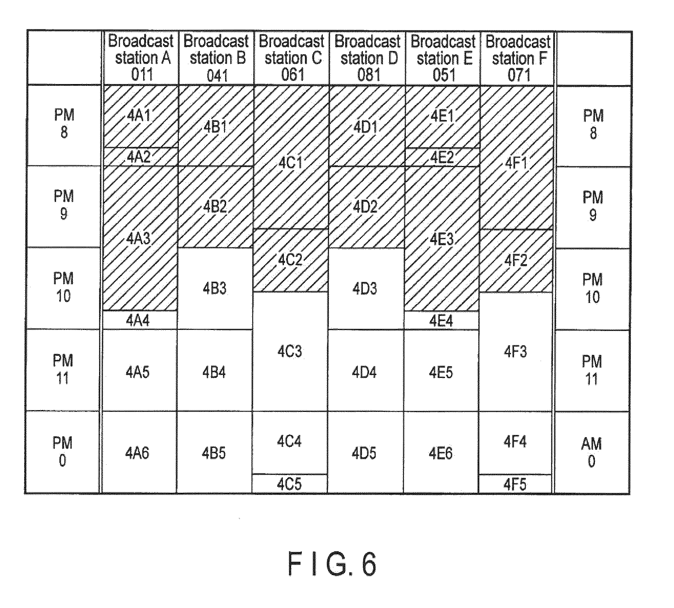

FIG. 6 is an example of the past program table made as described above. It is assumed that a display color is changed in accordance with the presence or absence of scene information for each program. In FIG. 6, scene information is provided for colored (represented by diagonal line) programs (4A1, 4A2, 4A3, 4B1, 4B2, 4B3, 4C1, 4C2, 4D1, 4D2, 4E1, 4E2, 4E3, 4E4, 4F1 and 4F2) in recorded programs from 0 a.m. to 8 p.m. broadcast by broadcast stations A to F.

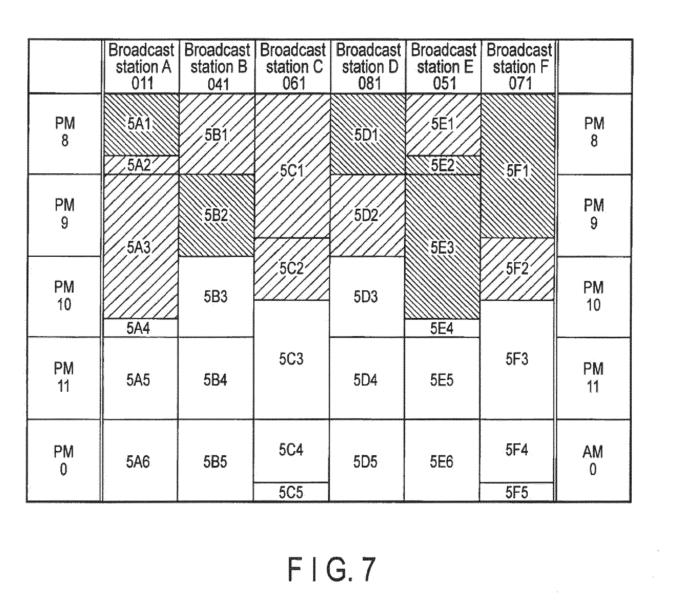

FIG. 7 illustrates that the programs having scene information for each program are 5A1, 5A2, 5A3, 5B1, 5B2, 5B3, 5C1, 5C2, 5D1, 5D2, 5E1, 5E2, 5E3, 5E4, 5F1 and 5F2 and that a plurality of scene information items are provided for the programs represented by diagonal line, i.e., 5A2, 5B2, 5D1, 5E2, 5E3 and 5F1.

In the past program table, a variety of programs are displayed at once. Each program column displays only the title of a program due to limited space, which makes it difficult for a user to confirm the content of each program and to select a program that he or she wants to view.

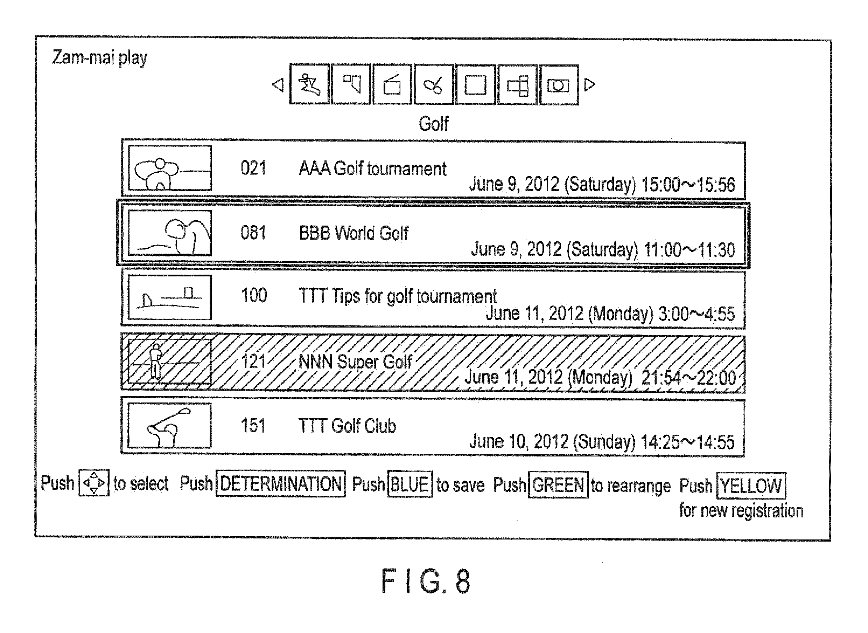

To solve this problem, there is provided so-called "Zam-mai play," in which a program is automatically picked up and presented in accordance with a user's preference so that a program designated by a user can be replayed. For example, when a user selects one of his or her hobbies, "Golf," the DTV 100 automatically picks up a program such as golf broadcast and golf class from a vast number of recorded programs and displays the list thereof as shown in FIG. 8. In the present embodiment, when displaying the list of programs, the DTV 100 determines a program having scene information and color-displays a column of a program having scene information (diagonal parts in the figure). Thus, a program having scene information can be easily selected in the list of Zam-mai play programs.

According to the above-mentioned embodiment, it is possible to easily recognize the presence or absence, the types and the like of scene information about recorded programs, from the past program table and the recording list. Since a user does not need to confirm every time whether scene information is provided for a program that he or she wants to view when using scene information, it is possible to improve convenience of scene information to a great extent.

Note that while a DTV having a recording function is used in the above explanation, the above-mentioned technology is generally applicable to recording apparatuses.

While it has been explained in the above-mentioned embodiment that a server that provides scene information is single, it may also be possible to acquire scene information provided independently from a plurality of servers.

While scene information is overlay-displayed in the above-mentioned embodiment, it may also be possible that scene information is displayed side by side, displayed on another screen, and the like.

While the acquisition of scene information is color-displayed in the above-mentioned embodiment, it may also be possible that an icon (for example, "i") is displayed in a program. In such a case, the mark of in icon may be changed according to the number of scene information items.

While the information of recorded program is recorded separately in the above-mentioned embodiment, it may be possible that the information is recorded in the program recording unit.

While the data of scene information is recorded in the scene information storage unit 110 in the above-mentioned embodiment, it may also be possible to receive scene information by communicating with the cloud server 300 every time.

While the color of a program that provides scene information is changed in the above-mentioned embodiment, it may also be possible to change the concentration of color.

While scene information is provided by a service provider in the above-mentioned embodiment, it may also be possible that the scene information includes scene information registered by a viewer.

While the display of a program including scene information is changed by the number of provided scene information items as well as the presence or absence of scene information in the above-mentioned embodiment, it may also be possible to change the display of a program including scene information by the number of scene information items included in provided scene information.

In the above-mentioned embodiment, it may also be possible to change the display based on usage data accumulated in the server and the usage status of scene information. For example, it may be possible to change the color of a program having scene information where jump is frequently used, where scene information is frequently hit in search, and the like.

It may be possible that the above-mentioned variation occurs at the same time. For example, it may be possible that the number of scene information items is represented by color, that the number of scene information items included in scene information is represented by concentration of color, and the like.

## Claims

1. An electronic device **characterized by** comprising:
a reception means (103) for receiving information of a plurality of broadcast programs;
a display control means (106) for displaying a program table generated by use of the information of the plurality of broadcast programs;
a recording control means (104) for recording a first broadcast program of the plurality of broadcast programs; and
an acquisition means (109) for acquiring first information about one or more scenes included in the first broadcast program after recording the first broadcast program,
wherein the display control means (106) displays information of the first broadcast program by a first display form in a first program table if displaying the first program table after recording the first broadcast program and before acquiring the first information, and displays information of the first broadcast program by a second display form different from the first display form in a second program table if displaying a second program table after acquiring the first information.

2. The electronic device according to claim 1, **characterized in that**
the second display form is capable of recognizing how many scene information items are included in the first information among one or more scenes included in the first information.

3. The electronic device according to claim 1, **characterized in that**
the second display form adds information or an icon with which to recognize that the first information has been acquired in a first column corresponding to the first broadcast program in the second program table.

4. The electronic device according to claim 1, **characterized in that**
the second display form is capable of recognizing that the first information has been acquired in a display status of the first column corresponding to the first broadcast program in the second program table.

5. The electronic device according to claim 1, **characterized in that**
the second program table is a part of the plurality of broadcast programs and includes a plurality of broadcast programs searched by use of at least any of information about program category, information about a user's preference, information about program popularity and a keyword search result of program information.

6. A method **characterized by** comprising:
receiving information of a plurality of broadcast programs;
displaying a program table generated by use of the information of the plurality of broadcast programs;
recording a first broadcast program of the plurality of broadcast programs;
acquiring first information about one or more scenes included in the first broadcast program after recording the first broadcast program;
displaying information of the first broadcast program by a first display form in a first program table if displaying the first program table after recording the first broadcast program and before acquiring the first information; and
displaying information of the first broadcast program by a second display form different from the first display form in a second program table if displaying a second program table after acquiring the first information.

7. The method according to claim 6, **characterized in that**
the second display form is capable of recognizing how many scene information items are included in the first information among one or more scenes included in the first information.

8. The method according to claim 6, **characterized in that**
the second display form adds information or an icon with which to recognize that the first information has been acquired in a first column corresponding to the first broadcast program in the second program table.

9. The method according to claim 6, **characterized in that**
the second display form is capable of recognizing that the first information has been acquired in a display status of the first column corresponding to the first broadcast program in the second program table.

10. The method according to claim 6, **characterized in that**
the second program table is a part of the plurality of broadcast programs and includes a plurality of broadcast programs searched by use of at least any of information about program category, information about a user's preference, information about program popularity and a keyword search result of program information.

11. A program that causes a computer to receive information of a plurality of broadcast information and display a program table generated by use of the information of the plurality of broadcast programs, **characterized by** comprising:
a recording step of recording a first broadcast program of the plurality of broadcast programs; and
an acquisition step of acquiring first information about one or more scenes included in the first broadcast program after recording the first broadcast program,
a display step of displaying information of the first broadcast program by a first display form in a first program table if displaying the first program table after recording the first broadcast program and before acquiring the first information, and displays information of the first broadcast program by a second display form different from the first display form in a second program table if displaying a second program table after acquiring the first information.

12. The program according to claim 11, **characterized in that**
the second display form is capable of recognizing how many scene information items are included in the first information among one or more scenes included in the first information.

13. The program according to claim 11, **characterized in that**
the second display form adds information or an icon with which to recognize that the first information has been acquired in a first column corresponding to the first broadcast program in the second program table.

14. The program according to claim 11, **characterized in that**
the second display form is capable of recognizing that the first information has been acquired in a display status of the first column corresponding to the first broadcast program in the second program table.

15. The program according to claim 11, **characterized in that**
the second program table is a part of the plurality of broadcast programs and includes a plurality of broadcast programs searched by use of at least any of information about program category, information about a user's preference, information about program popularity and a keyword search result of program information.
